# EUROPEAN PATENT SPECIFICATION

(11) **EP 4 451 838 B1**
(45) Date of publication and mention of the grant of the patent: **29.04.2026**
(21) Application number: 22797525.7
(22) Date of filing: 14.10.2022
(51) Int. Cl.: A01D 34/00

(54) **A ROBOTIC LAWN MOWER WITH ENHANCED CUTTING PROPERTIES**
RASENMÄHROBOTER MIT VERBESSERTEN SCHNEIDEIGENSCHAFTEN
TONDEUSE À GAZON ROBOTISÉE AYANT DES PROPRIÉTÉS DE COUPE AMÉLIORÉES

(30) Priority: 22.12.2021 SE 2151583
(43) Date of publication of application: 30.10.2024
(73) Proprietor: Husqvarna AB, 561 82 Huskvarna (SE)
(72) Inventor: HJELMÅKER, Olle, 55594 JÖNKÖPING (SE)
(86) International application number: PCT/SE2022/050929
(87) International publication number: WO 2023/121527

(56) References cited:
- WO-A1-2020/063811
- WO-A1-2020/192173
- WO-A1-2020/242363

## Description

### TECHNICAL FIELD

The present disclosure relates to a robotic lawn mower that is adapted to operate within a certain operation area. The robotic lawn mower comprises a body, at least two drive wheels, at least one swivelable wheel, a control unit adapted to control the operation of the robotic lawn mower, and an offset rotatable grass cutting disc having an offset rotation axis.

### BACKGROUND

Robotic lawn mowers such as for example robotic lawn mowers are becoming increasingly more popular. A robotic lawn mower is usually battery-powered by means of a rechargeable battery and is adapted to cut grass on a user's lawn automatically. The robotic lawn mower can be charged automatically without intervention of the user, and does not need to be manually managed after being set once.

In a typical deployment a work area, such as a garden, park, sports field, golf court and the like, the work area is enclosed by a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK).

A problem associated with robotic lawnmowers is that they normally have a limited ability to cut grass close to objects and borders. That is, normally, the cutting unit is arranged at an underside of a lawnmower body of the robotic lawnmower and portions of the lawnmower body, and/or wheels attached thereto, may hinder the cutting unit from reaching grass close to objects and borders. If so, the cutting result is impaired because there will be uncut grass close to object such as trees, stones, furniture, building walls, and the like, and also borders. At the same time it is important that the cutting unit is protected from contacting objects that are not intended to cut, such as larger objects, as well as protecting a user from coming into contact with the cutting unit when running. In particular, a user's hands and feet should be prevented from coming into contact with a running cutting unit. The document WO 2020/063811 A1 discloses an automatic lawnmower comprising: a body, provided with a shell and a driving mechanism for driving the body to move; a main lawnmowing unit positioned below the shell and having a first cutting area; a trimming unit positioned on the outer side of the main lawnmowing unit and having a protective cover, the protective cover being configured to at least cover the part of the trimming unit positioned on the outer side of the shell when the trimming unit is in a working state.

It is therefore desired to provide means and a method for cutting grass close to objects and borders with maintained cutter unit protection.

### SUMMARY OF THE CLAIMED INVENTION

The present invention claims a robotic lawn mover according to claim 1. Preferred embodiments are claimed in the dependent claims 2-11.

### SUMMARY OF THE DISCLOSURE

The object of the present disclosure is to provide means and a method for cutting grass close to objects and borders with maintained cutter unit protection.

This object is achieved by means of a robotic lawn mower comprising a body, at least two drive wheels, a drive motor arrangement drivably connected to the drive wheels, and at least one swivelable wheel adapted to swivel around a swivel axis. The robotic lawn mower further comprises a control unit adapted to control the operation of the robotic lawn mower, and an offset rotatable grass cutting disc having an offset rotation axis. The offset rotation axis is arranged at a first distance from a longitudinal center plane of the robotic lawnmower. The robotic lawnmower further comprises a guard covering at least a portion of the offset rotatable grass cutting unit, where the guard is attached to a pivot axle and arranged to pivot with the pivot axle in dependence of a travelling direction of the robotic lawn mower.

This means that when the robotic lawn mower is turning, the guard pivots correspondingly with the pivot axle. In this way, the position of the guard follows the present travelling direction of the robotic lawn mower and the offset rotatable grass cutting disc is always facing the grass to be cut in the present travelling direction of the robotic lawn mower with maintained protection of the offset rotatable grass cutting disc. This further means that the grass that is about to be cut is unaffected by the guard, for example not being bent, and cut grass and other debris will not get stuck in the guard.

According to some aspects, the pivot axle is connected to a guard motor that is adapted to position the guard in at least two different positions by rotating the guard with the pivot axle.

In this way, the guard can be positioned in a desired position in a reliable manner.

According to some aspects, the robotic lawn mower comprises a sensor device that is adapted to detect an angular position of the swivelable wheel around the swivel axis. According to some further aspects, the control unit is adapted to receive detected angular positions from the sensor device and to control the guard motor in dependence of the detected angular positions.

This provides a well-defined travelling direction for controlling the guard motor.

According to some aspects, the control unit is adapted to determine the travelling direction, to control the travelling direction by controlling the drive motor arrangement, and to control the guard motor in dependence of the determined travelling direction of the robotic lawn mower.

In this way, an intended travelling direction, determined by the control unit, is used directly to control the guard motor which provides a well-defined travelling direction for controlling the guard motor.

According to some aspects, the swivelable wheel is attached to a wheel holder, where the robotic lawn mower comprises a mechanical connection between the wheel holder and the guard. The mechanical connection is adapted to make the guard to pivot around the pivot axis when the swivelable wheel pivots around the swivel axis.

This provides uncomplicated and reliable positioning of the guard

According to some aspects, the robotic lawn mower further comprises a center rotatable grass cutting disc having a centered rotation axis arranged on the longitudinal center plane.

In this way, the grass cutting capacity is increased, which in particular is beneficial when large grass areas are to be cut.

According to some aspects, the swivel axis is arranged on the longitudinal center plane. This provides symmetry and stability.

According to some aspects, the swivel axis is arranged at a second distance from the longitudinal center plane and on another side of the longitudinal center plane than the offset rotation axis. In this way, an overhang is increased which in turn means that cutting capacity along borders is increased.

According to some aspects, the further comprising a further offset rotatable grass cutting disc having a further offset rotation axis, where the further offset rotation axis is arranged at a third distance from the longitudinal center plane of the robotic lawnmower. The robotic lawnmower comprises a further guard covering at least a portion of the further offset rotatable grass cutting unit. The further guard is attached to a further pivot axle and arranged to pivot with the further pivot axle in dependence of a travelling direction of the robotic lawn mower. The offset rotatable grass cutting discs are positioned on opposite sides of the longitudinal center plane.

In this way, there are two overhangs which in turn means that cutting capacity along borders is increased.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the invention, as long as they are covered by the wording of the appended claim 1.

### BRIEF DESCRIPTION OF THE DRAWINGS

The present disclosure will now be described more in detail with reference to the appended drawings, where:
- Figure 1: shows a side view of a robotic lawn mower;
- Figure 2: shows a detail bottom view of a swivelable wheel;
- Figure 3: shows a bottom view of a robotic lawn mower according to a first example, moving in a first direction;
- Figure 4: shows a bottom view of a robotic lawn mower according to a first example, moving in a second direction;
- Figure 5: shows a bottom view of a robotic lawn mower according to a first example, moving in a third direction;
- Figure 6: shows a bottom view of a robotic lawn mower according to a second example;
- Figure 7: shows a bottom view of a robotic lawn mower according to a third example;
- Figure 8: shows a top view of a robotic lawn mower in a situation during operation; and
- Figure 9: shows a bottom perspective view of a guard.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

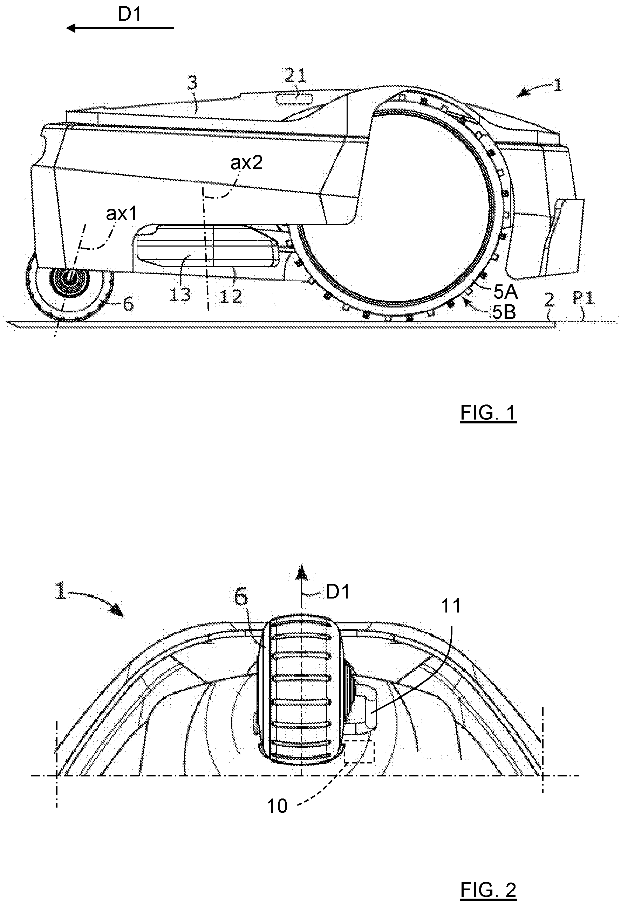

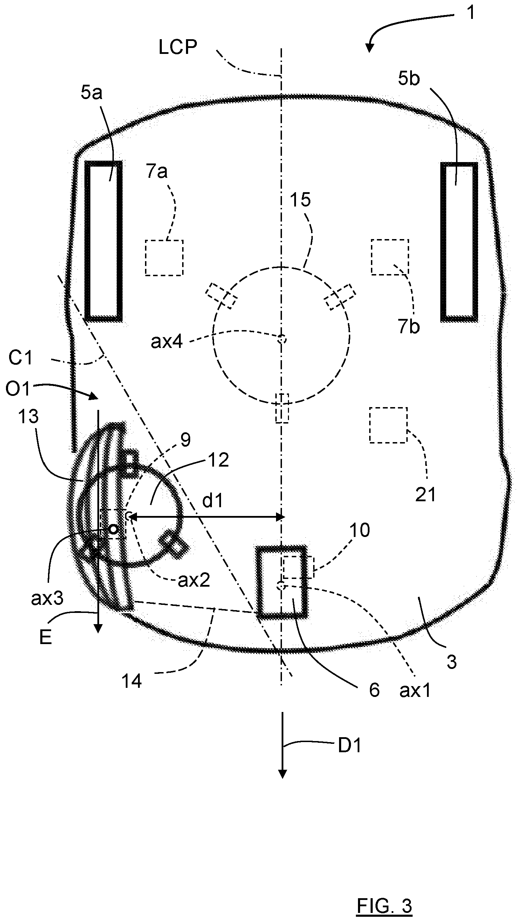

Figure 1 shows a side view of a robotic lawn mower 1 that is adapted for a forward travelling direction F and a reverse travelling direction R. Figure 2 shows details of a swivelable wheel 6 and Figure 3 show a bottom view of the robotic lawn mower 1 when travelling in a first travelling direction D1.

The robotic lawn mower 1 comprises a body 3, a control unit 21 adapted to control the operation of the robotic lawn mower 1, at least two drive wheels 5a, 5b, a drive motor arrangement 7a, 7b drivably connected to the drive wheels 5a, 5b, and at least one swivelable wheel 6 adapted to swivel around a swivel axis ax1. Here, there are two drive wheels 5a, 5b, and one swivelable wheel 6 acting as a support wheel.

According to some aspects, the drive wheels 5a, 5b are powered by a corresponding electrical motor 7a, 7b of the drive motor arrangement 7a, 7b to provide motive power and/or steering of the robotic lawnmower 1. Steering of the robotic lawnmower 1 may be provided by rotating the drive wheels 5a, 5b at different rotational speeds.

The wheels 5a, 5b, 6 are configured to abut against a ground surface 2 in a first plane P1 during operation of the robotic lawnmower 1, where the first plane P1 will extend along a ground surface 2 when the robotic lawnmower 1 is positioned on a flat ground surface 2 in an intended use position on the ground surface 2.

The robotic lawn mower 1 further comprises an offset rotatable grass cutting disc 12 having an offset rotation axis ax2, where the offset rotation axis ax2 is arranged at a shortest first distance d1 from a longitudinal center plane LCP of the robotic lawnmower 1, where the longitudinal center plane LCP extends through a lateral center of the robotic lawnmower 1 in a vertical direction of the robotic lawnmower 1.

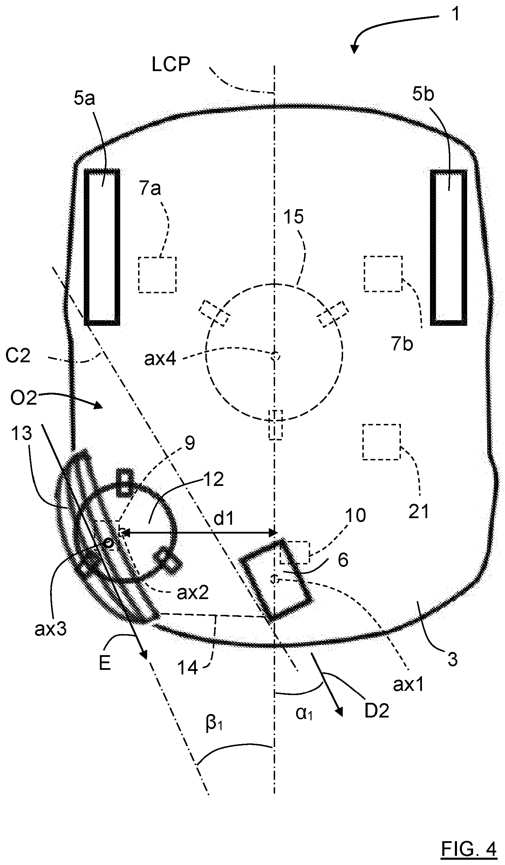

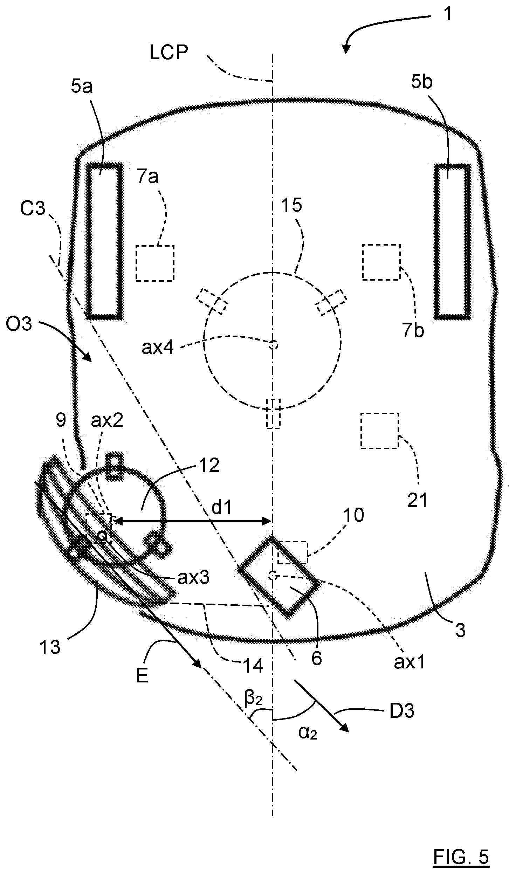

According to the present disclosure, with reference also to Figure 4 and Figure 5 which show bottom views of the robotic lawn mower 1 when travelling in second and third travelling directions D2, D3, the robotic lawnmower 1 comprises a guard 13 covering at least a portion of the offset rotatable grass cutting unit 12, the guard 13 being attached to a pivot axle ax3 and arranged to pivot with the pivot axle ax3 in dependence of a travelling direction D1, D2, D3 of the robotic lawn mower 1.

This means that when the robotic lawn mower 1 is turning, for example by rotating the drive wheels 5a, 5b at different rotational speeds, the guard 13 pivots correspondingly with the pivot axle ax3. In this way, the position of the guard 13 follows the present travelling direction of the robotic lawn mower 1, and the offset rotatable grass cutting disc 12 is always facing the grass to be cut in the present travelling direction of the robotic lawn mower 1 with maintained protection of the offset rotatable grass cutting disc 12. Previous such guards or other protective devices have been fixed, such that when the robotic lawn mower 1 is turning, the guard becomes positioned in the travelling direction D1, D2, D3 of the robotic lawn mower 1 and affects the grass that is about to be cut, for example by bending grass, while cut grass and other debris can get stuck in the guard.

All these problems are alleviated by means of the present disclosure, since the guard 13 is arranged to pivot in dependence of the travelling direction D1, D2, D3 of the robotic lawn mower 1 as mentioned above.

In Figure 3, the lawn mower 1 is travelling in the first travelling direction D1 and the guard 13 being in a first pivot position. According to some aspects, the guard has a main longitudinal extension E that runs essentially parallel to the longitudinal center plane LCP when the first travelling direction D1 is directed along the longitudinal center plane LCP, i.e. straight ahead.

In Figure 4, the lawn mower 1 is travelling in a second travelling direction D2 that presents a first travel angle α₁ to the longitudinal center plane LCP, and the guard 13 is in a second pivot position. According to some aspects, the main longitudinal extension E presents a first guard angle β₁ to the longitudinal center plane LCP.

According to some further aspects, the first travel angle α₁ and the first guard angle β₁ are essentially equal.

In Figure 5, the lawn mower 1 is travelling in a third travelling direction D3 that presents a second travel angle α₂ to the longitudinal center plane LCP, the second travel angle α₂ exceeding the first travel angle α₁, and the guard 13 is in a third pivot position. According to some aspects, the main longitudinal extension E presents a second guard angle β₂ to the longitudinal center plane LCP. According to some further aspects, the second travel angle α₂ and the second guard angle β₂ are essentially equal.

As shown in Figure 3 - Figure 5 there is an overhang line C1, C2, C3 that changes slightly when the swivelable wheel 6 turns. In order to cut grass where the wheels 5a, 5b; 6 do not interfere, there is an overhang O1, O2, O3 between the overhang line C1, C2, C3 and the outer contour of the body 3 under the lawn mower 1, the overhang O1, O2, O3 covering the offset rotatable grass cutting disc 12.

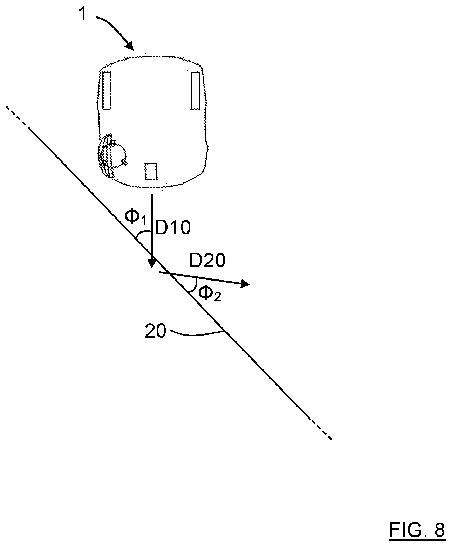

As shown in Figure 8, cutting the grass along a boundary 20, such as a boundary wire or a virtual boundary, can then be achieved by controlling the robotic lawn mower 1 to approach the boundary 20 in a first direction D10 at a first angle Φ₁ to the boundary 20, and when the boundary 20 has been reached, controlling the robotic lawn mower 1 to turn away from the boundary 20, in a bouncing movement against the boundary 20, in a second direction D20 at a second angle Φ₂ to the boundary 20. The overhang O will then sweep over the boundary 20 and provide an efficient cutting along the boundary 20, edge cutting being executed while the bouncing movement is performed. When the first direction D10 is changed to the second direction D20, the robotic lawn mower 1 is turning and the guard is pivoting in a controlled manner as described with reference to Figure 3 - Figure 5. According to some aspects, the first angle Φ₁ equals the second angle Φ₂.

There are many different ways to implement the controlled movement of the guard 13, a number of examples will be provided in the following.

According to some aspects, the pivot axle ax3 is connected to a guard motor 9 that is adapted to position the guard 13 in at least two different positions by rotating the guard 13 with the pivot axle ax3. In this way, the guard can be positioned in a desired position in a reliable manner. Such a guard motor can be for example a step motor that is controlled digitally, or a PWM (Pulse Width Modulation) controlled motor, possibly with a feedback means that keeps track of the current position of the guard 13. In particular a PWM-controlled motor may also comprise a gearbox such that a desired rotational speed for the pivot axle ax3 is acquired.

According to some aspects, the robotic lawn mower 1 comprises a sensor device 10 that is adapted to detect an angular position of the swivelable wheel 6 around the swivel axis ax1. According to some further aspects, the control unit 21 is adapted to receive detected angular positions from the sensor device 10 and to control the guard motor 9 in dependence of the detected angular positions.

This means that the position of the swivelable wheel 6, detected by a sensor device 10, is used as an indication of the present travelling direction D1, D2, D3. This detected position is then used for setting the guard 13 in a suitable position by means of the the guard motor 9. This provides a well-defined travelling direction D1, D2, D3 for controlling the guard motor 9.

According to some aspects, the control unit 21 is adapted to determine the travelling direction D1, D2, D3, to control the travelling direction D1, D2, D3 by controlling the drive motor arrangement 7a, 7b, and to control the guard motor 9 in dependence of the determined travelling direction D1, D2, D3 of the robotic lawn mower 1.

This means that the travelling direction D1, D2, D3 that has been determined by the control unit 21 and is implemented by controlling the drive motor arrangement 7a, 7b and thus the rotational speeds of the drive wheels 5a, 5b, is used to control the guard motor 9. In this way, an intended travelling direction D1, D2, D3, determined by the control unit 21, is used directly to control the guard motor 9. This provides a well-defined travelling direction D1, D2, D3 for controlling the guard motor 9.

According to some aspects, the swivelable wheel 6 is attached to a wheel holder 11, where the robotic lawn mower 1 comprises a mechanical connection 14 between the wheel holder 11 and the guard 13, where the mechanical connection 14 is adapted to make the guard 13 to pivot with the pivot axle ax3 when the swivelable wheel 6 pivots around the swivel axis ax1.

In this way, the actual position of the swivelable wheel 6, indicating the travelling direction D1, D2, D3, is used to control the position of the guard 13 by means of the mechanical connection 14. This provides uncomplicated and reliable positioning of the guard 13. According to some aspects, the mechanical connection 14 is in form of an endless chain or belt, or in the form of a linkage assembly.

In the above, it should be noted that the pivot axle ax3 is a physical axle that connects the guard 13 to a guard motor or a bearing or similar. The swivel axis ax1 and the offset rotation axis ax2 are imaginary axes, as indicated with dashed lines. According to some aspects, the swivel axis ax1 is associated with the wheel holder 11 and its configuration, and the offset rotation axis ax2 is associated with a corresponding physical axle that at least indirectly connects the offset rotatable grass cutting disc 12 to a first cutter motor (not shown).

Furthermore, in Figure 4-6 the guard motor 9, the sensor device 10, and the mechanical connection 14 are shown for one and the same robotic lawn mower 1, but this is mainly only for explanatory reasons. The guard motor 9, the sensor device 10, and the mechanical connection 14 are according to some aspects optional devices, all of these not necessarily being present on a robotic lawn mower at the same time although combinations are possible, for example as discussed above.

According to some aspects, there is one swivelable wheel 6 having a swivel axis ax1 arranged on the longitudinal center plane LCP as shown in Figure 3 - Figure 5.

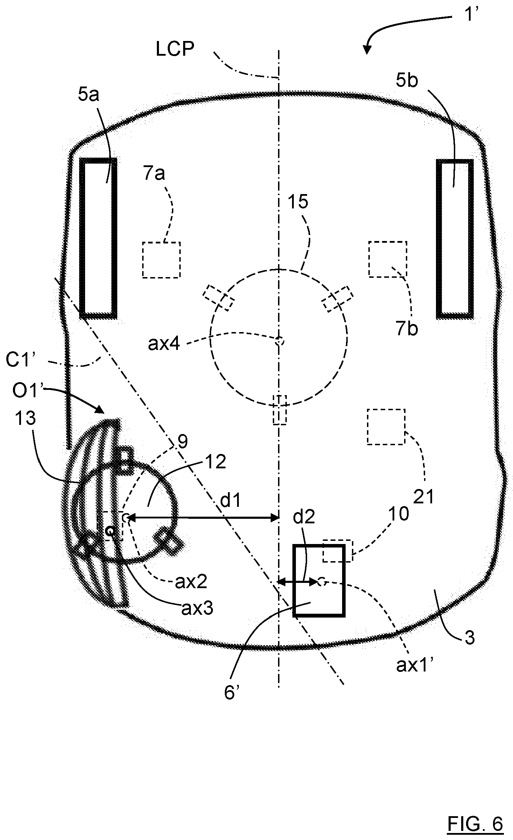

Alternatively, as shown in Figure 6 that corresponds to Figure 3, there is a robotic lawn mower 1 where, according to some aspects, the swivel axis ax1' is arranged at a second distance d2 from the longitudinal center plane LCP and on another side of the longitudinal center plane LCP than the offset rotation axis ax2. This means that the one swivelable wheel 6' is more remote from the rotatable grass cutting disc 12 which in turn means that there is an overhang line C1' and a corresponding overhang O1' that has been increased. This in turn means that cutting capacity along borders is increased.

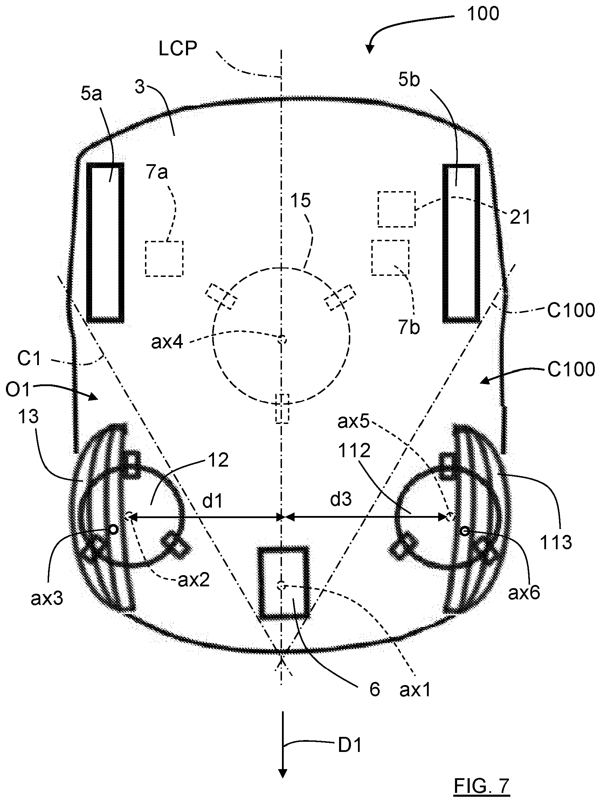

In the following, an alternative robotic lawn mower will be described with reference to Figure 7 that corresponds to Figure 3. Not all items of Figure 3 are shown in Figure 7, but all different examples of functions described with reference to Figure 3 are of course applicable here as well.

According to some aspects, the robotic lawn mower 100 comprises a further offset rotatable grass cutting disc 112 having a further offset rotation axis ax5, where the further offset rotation axis ax5 is arranged at a third distance d3 from the longitudinal center plane LCP of the robotic lawnmower 100. The robotic lawnmower 100 comprises a further guard 113 covering at least a portion of the further offset rotatable grass cutting unit 112. The further guard 113 is attached to a further pivot axle ax6 and arranged to pivot with the further pivot axle ax6 in dependence of a travelling direction D1, D2, D3 of the robotic lawn mower 100. The offset rotatable grass cutting discs 12, 112 are positioned on opposite sides of the longitudinal center plane LCP. The further pivot axle ax6 is of the same type as the pivot axle ax3, and its pivoting movement can be controlled in the same manner as the pivot axle ax3.

In this way, there are two overhang lines C1, C100 and a corresponding overhangs O1, O100. This in turn means that cutting capacity along borders is increased.

Corresponding to the previous discussions, the further offset rotation axis ax5 is associated with a corresponding physical axle that at least indirectly connects the further offset rotatable grass cutting unit 112 to a second cutter motor (not shown).

According to some aspects, the offset rotatable grass cutting discs 12, 112 are positioned symmetrical with respect to the longitudinal center plane LCP such that the first distance d1 equals the third distance d3.

The present disclosure is not limited to the above, but may vary freely within the scope of the appended claims. For example, according to some aspects and being applicable to all examples, the robotic lawn mower 1, 100 further comprises a center rotatable grass cutting disc 15 having a centered rotation axis ax4 arranged on the longitudinal center plane LCP. In this way, the grass cutting capacity is increased, which in particular is beneficial when large grass areas are to be cut. Corresponding to the previous discussions, the centered rotation axis ax4 is associated with a corresponding physical axle that at least indirectly connects the center rotatable grass cutting disc 15 to a third cutter motor (not shown).

There can be a common cutter motor that is adapted to propel two or more cutting discs 12, 15, 112.

All examples can be combined in any suitable manner, for example the mechanical connection 14 can be supplemented with a motor, such as for example the guard motor 9.

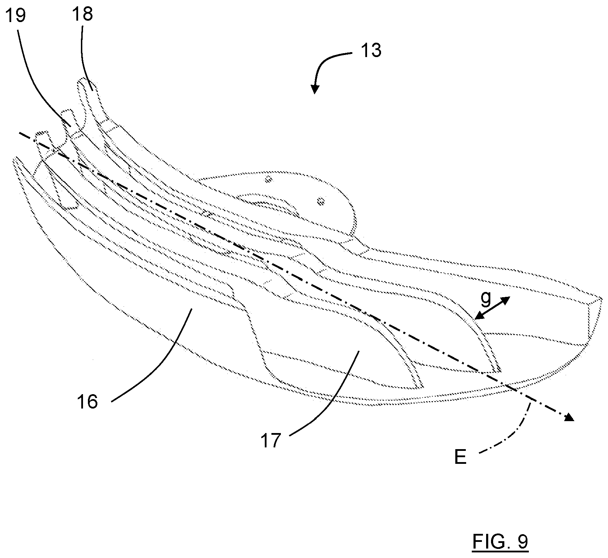

According to some aspects, as shown in Figure 9, the guard 13 comprises a plurality of laths 16, 17, 18, 19 that mainly run along the longitudinal extension E. This provides openings where debris can escape and/or be easily removed, while maintaining a high degree of safety. Preferably, gaps g between adjacent laths 16, 17, 18, 19 (one gap g indicated in Figure 9) will not admit insertion of a human finger or toe.

According to some aspects, as shown in Figure 1, the offset rotation axis ax2 presents an angle to the first plane P1 that differs from 90°.

According to some aspects, with reference to Figure 8, when the robotic lawn mower 100 is moving within an operation area or within a boundary 20, it means that the body 3 and wheels 5a, 5b, 6 at least partly are positioned within the operation area or within the boundary 20. This means that the robotic lawn mower 100 can move on the boundary 20. It is of course also conceivable that no part of the outdoor robotic work tool, crosses the boundary 20. This can be due to the fact that the detection of the boundary 20 can be made by means of a detector (not shown) that is positioned somewhere at the robotic lawn mower 100, for example in a central position. First when the detector is about to cross the boundary 20, the robotic lawn mower 100 is considered to have reached the boundary 20.

## Claims

1. A robotic lawn mower (1) comprising a body (3), at least two drive wheels (5a, 5b), a drive motor arrangement (7a, 7b) drivably connected to the drive wheels (5a, 5b), at least one swivelable wheel (6) adapted to swivel around a swivel axis (ax1), a control unit (21), adapted to control the operation of the robotic lawn mower (1), and an offset rotatable grass cutting disc (12) having an offset rotation axis (ax2), where the offset rotation axis (ax2) is arranged at a first distance (d1) from a longitudinal center plane (LCP) of the robotic lawnmower (1), wherein the robotic lawnmower (1) comprises a guard (13) covering at least a portion of the offset rotatable grass cutting disc (12), the guard (13) being attached to a pivot axle (ax3) and arranged to pivot with the pivot axle (ax3) in dependence of a travelling direction (D1, D2, D3) of the robotic lawn mower (1).

2. The robotic lawn mower (1) according to claim 1, wherein the pivot axle (ax3) is connected to a guard motor (9) that is adapted to position the guard (13) in at least two different positions by rotating the guard (13) with the pivot axle (ax3).

3. The robotic lawn mower (1) according to claim 2, wherein the robotic lawn mower (1) comprises a sensor device (10) that is adapted to detect an angular position of the swivelable wheel (6) around the swivel axis (ax1).

4. The robotic lawn mower (1) according to claim 3, wherein the control unit (21) is adapted to receive detected angular positions from the sensor device (10) and to control the guard motor (9) in dependence of the detected angular positions.

5. The robotic lawn mower (1) according to any one of the claims 2-4, wherein the control unit (21) is adapted to determine the travelling direction (D1, D2, D3), to control the travelling direction (D1, D2, D3) by controlling the drive motor arrangement (7a, 7b), and to control the guard motor (9) in dependence of the determined travelling direction (D1, D2, D3) of the robotic lawn mower (1).

6. The robotic lawn mower (1) according to claim 1, wherein the swivelable wheel (6) is attached to a wheel holder (11), where the robotic lawn mower (1) comprises a mechanical connection (14) between the wheel holder (11) and the guard (13), where the mechanical connection (14) is adapted to make the guard (13) to pivot around the pivot axis (ax3) when the swivelable wheel (6) pivots around the swivel axis (ax1).

7. The robotic lawn mower (1) according to any one of the previous claims, further comprising a center rotatable grass cutting disc (15) having a centered rotation axis (ax4) arranged on the longitudinal center plane (LCP).

8. The robotic lawn mower (1) according to any one of the previous claims, wherein the swivel axis (ax1) is arranged on the longitudinal center plane (LCP).

9. The robotic lawn mower (1) according to any one of the claims 1-7, wherein the swivel axis (ax1) is arranged at a second distance (d2) from the longitudinal center plane (LCP) and on another side of the longitudinal center plane (LCP) than the offset rotation axis (ax2).

10. The robotic lawn mower (1) according to any one of the previous claims, wherein the guard (13) has a main longitudinal extension (E), and where the guard (13) comprises a plurality of laths (16, 17, 18) that mainly run along the longitudinal extension (E).

11. The robotic lawn mower (100)according to any one of the previous claims, further comprising a further offset rotatable grass cutting disc (112) having a further offset rotation axis (ax5), where the further offset rotation axis (ax5) is arranged at a third distance (d3) from the longitudinal center plane (LCP) of the robotic lawnmower (1), where the robotic lawnmower (1) comprises a further guard (113) covering at least a portion of the further offset rotatable grass cutting disc (112), the further guard (113) being attached to a further pivot axle (ax6) and arranged to pivot with the further pivot axle (ax6) in dependence of a travelling direction (D1, D2, D3) of the robotic lawn mower (1), the offset rotatable grass cutting discs (12, 112) being positioned on opposite sides of the longitudinal center plane (LCP).

## Patentansprüche

1. Robotischer Rasenmäher (1), umfassend einen Körper (3), mindestens zwei Antriebsräder (5a, 5b), eine Antriebsmotoranordnung (7a, 7b), die mit den Antriebsrädern (5a, 5b) antreibend verbunden ist, mindestens ein schwenkbares Rad (6), das angepasst ist, um eine Schwenkachse (ax1) herum zu schwenken, eine Steuereinheit (21), die angepasst ist, um den Betrieb des robotischen Rasenmähers (1) zu steuern, und eine versetzte rotierbare Grasschneidscheibe (12), die eine versetzten Rotationsachse (ax2) aufweist, wobei die versetzte Rotationsachse (ax2) in einem ersten Abstand (d1) von einer Längsmittelebene (LCP) des robotischen Rasenmähers (1) angeordnet ist, wobei der robotische Rasenmäher (1) eine Schutzvorrichtung (13) umfasst, die mindestens einen Abschnitt der versetzten rotierbaren Grasschneidscheibe (12) abdeckt, wobei die Schutzvorrichtung (13) an einer Drehachse (ax3) befestigt ist und angeordnet ist, um sich mit der Drehachse (ax3) in Abhängigkeit von einer Fahrtrichtung (D1, D2, D3) des robotischen Rasenmähers (1) zu drehen.

2. Robotischer Rasenmäher (1) nach Anspruch 1, wobei die Drehachse (ax3) mit einem Schutzmotor (9) verbunden ist, der angepasst ist, um die Schutzvorrichtung (13) in mindestens zwei unterschiedlichen Positionen zu positionieren, durch das Rotieren der Schutzvorrichtung (13) mit der Drehachse (ax3).

3. Robotischer Rasenmäher (1) nach Anspruch 2, wobei der robotische Rasenmäher (1) eine Sensorvorrichtung (10) umfasst, die angepasst ist, um eine Winkelposition des schwenkbaren Rads (6) um die Schwenkachse (ax1) herum zu erfassen.

4. Robotischer Rasenmäher (1) nach Anspruch 3, wobei die Steuereinheit (21) angepasst ist, um erfasste Winkelpositionen von der Sensorvorrichtung (10) zu empfangen und den Schutzmotor (9) in Abhängigkeit von den erfassten Winkelpositionen zu steuern.

5. Robotischer Rasenmäher (1) nach einem der Ansprüche 2 bis 4, wobei die Steuereinheit (21) angepasst ist, um die Fahrtrichtung (D1, D2, D3) zu bestimmen, die Fahrtrichtung (D1, D2, D3) durch das Steuern der Antriebsmotoranordnung (7a, 7b) zu steuern, und den Schutzmotor (9) in Abhängigkeit von der bestimmten Fahrtrichtung (D1, D2, D3) des robotischen Rasenmähers (1) zu steuern.

6. Robotischer Rasenmäher (1) nach Anspruch 1, wobei das schwenkbare Rad (6) an einem Radhalter (11) befestigt ist, wobei der robotische Rasenmäher (1) eine mechanische Verbindung (14) zwischen dem Radhalter (11) und der Schutzvorrichtung (13) umfasst, wobei die mechanische Verbindung (14) angepasst ist, um die Schutzvorrichtung (13) um die Drehachse (ax3) herum drehen zu lassen, wenn sich das schwenkbare Rad (6) um die Schwenkachse (ax1) herum dreht.

7. Robotischer Rasenmäher (1) nach einem der vorstehenden Ansprüche, ferner umfassend eine mittlere rotierbare Grasschneidscheibe (15), die eine mittlere Rotationsachse (ax4) aufweist, die auf der Längsmittelebene (LCP) angeordnet ist.

8. Robotischer Rasenmäher (1) nach einem der vorstehenden Ansprüche, wobei die Schwenkachse (ax1) auf der Längsmittelebene (LCP) angeordnet ist.

9. Robotischer Rasenmäher (1) nach einem der Ansprüche 1 bis 7, wobei die Schwenkachse (ax1) in einem zweiten Abstand (d2) von der Längsmittelebene (LCP) und auf einer anderen Seite der Längsmittelebene (LCP) als die versetzte Rotationsachse (ax2) angeordnet ist.

10. Robotischer Rasenmäher (1) nach einem der vorstehenden Ansprüche, wobei die Schutzvorrichtung (13) eine Hauptlängsverlängerung (E) aufweist, und wobei die Schutzvorrichtung (13) eine Vielzahl von Latten (16, 17, 18) umfasst, die hauptsächlich entlang der Längsverlängerung (E) verlaufen.

11. Robotischer Rasenmäher (100) nach einem der vorstehenden Ansprüche, ferner umfassend eine weitere versetzte rotierbare Grasschneidscheibe (112), die eine weitere versetzte Rotationsachse (ax5) aufweist, wobei die weitere versetzte Rotationsachse (ax5) in einem dritten Abstand (d3) von der Längsmittelebene (LCP) des robotischen Rasenmähers (1) angeordnet ist, wobei der robotische Rasenmäher (1) eine weitere Schutzvorrichtung (113) umfasst, die mindestens einen Abschnitt der weiteren versetzten rotierbaren Grasschneidscheibe (112) abdeckt, wobei die weitere Schutzvorrichtung (113) an einer weiteren Drehachse (ax6) befestigt ist und angeordnet ist, um sich mit der weiteren Drehachse (ax6) in Abhängigkeit von einer Fahrtrichtung (D1, D2, D3) des robotischen Rasenmähers (1) zu drehen, wobei die versetzten rotierbaren Grasschneidscheiben (12, 112) auf gegenüberliegenden Seiten der Längsmittelebene (LCP) positioniert sind.

## Revendications

1. Tondeuse à gazon robotisée (1) comprenant un corps (3), au moins deux roues motrices (5a, 5b), un agencement moteur d'entraînement (7a, 7b) relié, de manière à pouvoir être entraîné, aux roues motrices (5a, 5b), au moins une roue pivotante (6) adaptée à pivoter autour d'un axe de pivotement (ax1), une unité de commande (21), adaptée à commander le fonctionnement de la tondeuse à gazon robotisée (1), et un disque de tonte de pelouse rotatif décalé (12) ayant un axe de rotation décalé (ax2), l'axe de rotation décalé (ax2) étant agencé à une première distance (d1) d'un plan central longitudinal (LCP) de la tondeuse à gazon robotisée (1), dans laquelle la tondeuse à gazon robotisée (1) comprend une protection (13) recouvrant au moins une partie du disque de tonte de pelouse rotatif décalé (12), la protection (13) étant fixée à un axe pivotant (ax3) et agencé pour pivoter avec l'axe pivotant (ax3) en fonction d'une direction de déplacement (D1, D2, D3) de la tondeuse à gazon robotisée (1).

2. Tondeuse à gazon robotisée (1) selon la revendication 1, dans laquelle l'axe de pivotement (ax3) est relié à un moteur de protection (9) qui est adapté à positionner la protection (13) dans au moins deux positions différentes en faisant tourner la protection (13) avec l'axe de pivotement (ax3).

3. Tondeuse à gazon robotisée (1) selon la revendication 2, dans laquelle la tondeuse à gazon robotisée (1) comprend un dispositif capteur (10) qui est adapté à détecter une position angulaire de la roue pivotante (6) autour de l'axe de pivotement (ax1).

4. Tondeuse à gazon robotisée (1) selon la revendication 3, dans laquelle l'unité de commande (21) est adaptée à recevoir des positions angulaires détectées par le dispositif capteur (10) et à commander le moteur de protection (9) en fonction des positions angulaires détectées.

5. Tondeuse à gazon robotisée (1) selon l'une quelconque des revendications 2 à 4, dans laquelle l'unité de commande (21) est adaptée à déterminer la direction de déplacement (D1, D2, D3), à commander la direction de déplacement (D1, D2, D3) en commandant l'agencement moteur d'entraînement (7a, 7b), et à commander le moteur de protection (9) en fonction de la direction de déplacement déterminée (D1, D2, D3) de la tondeuse à gazon robotisée (1).

6. Tondeuse à gazon robotisée (1) selon la revendication 1, dans laquelle la roue pivotante (6) est fixée à un support de roue (11), la tondeuse à gazon robotisée (1) comprenant une liaison mécanique (14) entre le support de roue (11) et la protection (13), la liaison mécanique (14) étant adaptée à faire pivoter la protection (13) autour de l'axe de pivotement (ax3) lorsque la roue pivotante (6) pivote autour de l'axe de pivotement (ax1).

7. Tondeuse à gazon robotisée (1) selon l'une quelconque des revendications précédentes, comprenant en outre un disque de tonte de pelouse rotatif central (15) ayant un axe de rotation centré (ax4) agencé sur le plan central longitudinal (LCP).

8. Tondeuse à gazon robotisée (1) selon l'une quelconque des revendications précédentes, dans laquelle l'axe de pivotement (ax1) est agencé sur le plan central longitudinal (LCP).

9. Tondeuse à gazon robotisée (1) selon l'une quelconque des revendications 1 à 7, dans laquelle l'axe de pivotement (ax1) est agencé à une deuxième distance (d2) du plan central longitudinal (LCP) et sur un autre côté du plan central longitudinal (LCP) que l'axe de rotation décalé (ax2).

10. Tondeuse à gazon robotisée (1) selon l'une quelconque des revendications précédentes, dans laquelle la protection (13) a une extension longitudinale principale (E), et dans laquelle la protection (13) comprend une pluralité de lattes (16, 17, 18) qui s'étendent principalement le long de l'extension longitudinale (E).

11. Tondeuse à gazon robotisée (100) selon l'une quelconque des revendications précédentes, comprenant en outre un disque de tonte de pelouse rotatif décalé supplémentaire (112) ayant un axe de rotation décalé supplémentaire (ax5), l'axe de rotation décalé supplémentaire (ax5) étant agencé à une troisième distance (d3) du plan central longitudinal (LCP) de la tondeuse à gazon robotisée (1), la tondeuse à gazon robotisée (1) comprenant une protection supplémentaire (113) recouvrant au moins une partie du disque de tonte de pelouse rotatif décalé supplémentaire (112), la protection supplémentaire (113) étant fixée à un axe de pivotement supplémentaire (ax6) et agencé pour pivoter avec l'axe de pivotement supplémentaire (ax6) en fonction d'une direction de déplacement (D1, D2, D3) de la tondeuse à gazon robotisée (1), les disques de tonte de pelouse rotatifs décalés (12, 112) étant positionnés sur des côtés opposés du plan central longitudinal (LCP).
